# EUROPÄISCHE PATENTSCHRIFT

(11) **EP 0 823 295 B1**
(45) Veröffentlichungstag und Bekanntmachung des Hinweises auf die Patenterteilung: **11.10.2000**
(21) Anmeldenummer: 97110896.4
(22) Anmeldetag: 02.07.1997
(51) Int. Cl.: B21C 37/08, B23K 31/02, B23K 26/00, B23K 9/032

(54) **Verfahren zum Ummanteln eines Kunststoffrohres mit einem Metallband und Schweissstation zum Verschweissen der einander überlappenden Längsränder des Metallbandes**
Method for sheathing a plastic pipe with a metal strip and welding station for welding lapping edges of the metal strip
Procédé pour revêtir un tube en matière synthétique avec une bande métallique et poste de soudage pour souder les bords se chevauchant de la bande métallique

(30) Priorität: 08.08.1996 DE 19632021
(43) Veröffentlichungstag der Anmeldung: 11.02.1998
(73) Patentinhaber: Hewing GmbH, 48607 Ochtrup (DE)
(72) Erfinder: Riesselmann, Franz-Josef, 49493 Lohne (DE)
(74) Vertreter: Hilleringmann, Jochen, Dipl.-Ing.

(56) Entgegenhaltungen:
- EP-A- 0 262 363
- EP-A- 0 639 411
- BE-A- 1 007 106
- DE-A- 2 809 971
- DE-A- 3 837 044
- DE-A- 4 323 838
- FR-A- 2 175 778
- US-A- 2 233 233
- US-A- 3 104 309
- US-A- 4 839 496
- PATENT ABSTRACTS OF JAPAN vol. 012, no. 164 (M-698), 18.Mai 1988 & JP 62 282778 A (SUMITOMO HEAVY IND LTD;OTHERS: 01), 8.Dezember 1987,
- PATENT ABSTRACTS OF JAPAN vol. 017, no. 592 (M-1502), 28.Oktober 1993 & JP 05 177354 A (TOA STEEL CO LTD;OTHERS: 01), 20.Juli 1993,

## Beschreibung

Die Erfindung betrifft ein Verfahren zum Ummanteln eines Kunststoffrohres mit einem Metallband gemäß dem Oberbegriff des Anspruchs 1 (siehe Z.B. BE 1 007 106 A), und eine Schweißstation zum Verschweißen der einander überlappenden Längsränder eines um ein Kunststoffrohr gelegten Metallbandes.

In der Haustechnik, d.h. im Sanitär- und im Heizungsbereich werden in zunehmendem Maße Kunststoffrohre anstelle von Metallrohren eingesetzt. Diese Kunststoffrohre benötigen eine Diffusionssperre, um das Eindringen von Sauerstoff zu verhindern. Beim Verlegen von Kunststoffrohren kann der sogenannte Memory-Effekt des Kunststoffmaterials ein gewisses Problem darstellen. Daher werden in letzter Zeit zunehmend Kunststoff/Metall-Verbundrohre eingesetzt, bei denen die Rohrwandung eine Metalleinlage aufweist, die beidseitig mit einer Kunststoffschicht versehen ist. Diese Verbundrohre behalten wegen der plastischen Verformbarkeit der Metalleinlage die ihnen bei der Verlegung verliehene Krümmung bei.

Die Herstellung derartiger Verbundrohre kann auf unterschiedliche Weise erfolgen. Bei einem Verfahren wird ein Metallband um ein Kunststoffrohr, das bei fertiggestelltem Verbundrohr das Kunststoff-Innenrohr bildet, herumgelegt, um an seinen überlappenden oder aneinanderstoßenden Längsrändern verschweißt zu werden. Bei einem anderen Verfahren wird ein Metallband um ein Kunststoffrohr gewickelt, wobei dieses Kunststoffrohr gedreht wird, wodurch sich das Metallband um das Kunststoffrohr wickelt. Bei dieser Herstellungstechnik überlappen sich die Längsränder zweier benachbarter Windungen des Metallbandes, um in diesem Bereich miteinander verschweißt zu werden.

Ein Problem beim Verschweißen ist, daß die Schweißnaht formungstechnisch bzw. wickeltechnisch bedingt nicht exakt geradlinig in axialer Richtung bzw. exakt gleichmäßig schraubenlinienförmig verläuft. Da der Schweißkopf, an dem das zu verschweißende Metallband entlanggeführt wird, feststeht, kann es zu Fehlproduktionen mit unzureichend verschweißter Naht kommen.

Der Erfindung liegt die Aufgabe zugrunde, ein Verfahren zum Ummanteln eines Kunststoffrohres mit einem Metallband zu schaffen, mit dem sich eine exakte Schweißnaht auch bei vom exakt geradlinigen Verlauf abweichenden Metallbandrändern erzielen läßt, und eine Schweißstation anzugeben, mit der dieses möglich ist.

Zur Lösung dieser Aufgabe wird mit der Erfindung ein Verfahren zum Ummanteln eines Kunststoffrohres mit einem Metallband vorgeschlagen, bei dem
- ein Metallband mit seinen Längsrändern überlappend um das Kunststoffrohr gelegt wird und
- das Metallband im Überlappungsbereich mittels eines Schweißkopfes verschweißt wird, wobei
- einer der beiden Längsränder des Metallbandes abgewinkelt wird und das Metallband derart um das Kunststoffrohr gelegt wird, daß der abgewinkelte Längsrand vom Kunststoffrohr weg gerichtet ist,
- der Verlauf des abgewinkelten Längsrandes von einem Sensor erfaßt wird und
- der Schweißkopf entsprechend der Erfassung des Verlaufs des abgewinkelten Längsrandes durch den Sensor nachgeführt wird.

Dieses Herstellungsverfahren läßt sich erfindungsgemäß mittels einer Schweißstation durchführen, die versehen ist mit
- einer Abhantvorrichtung zur Abhantung einer der werden Längsränder des Metallbandes
- einem Schweißkopf, relativ zu dem sich das zu verschweißende Metallband bewegt,
- einem Sensor zum Erfassen des Verlaufs eines abgewinkelten Längsrandes des Metallbandes, wobei der Sensor in Richtung der Relativbewegung von Metallband und Schweißkopf vor diesem angeordnet ist, und
- einer Positioniervorrichtung zum Positionieren des Schweißkopfes quer zur Relativbewegungsrichtung von Metallband und Schweißkopf, wobei die Positioniervorrichtung Ausgangssignale von dem Sensor empfängt und den Schweißkopf entsprechend dem Verlauf des abgewinkelten Längsrandes des Metallbandes nachführt.

Bei der Erfindung wird kurz vor dem Verschweißen der Verlauf der Kante des radial außenliegenden Längsrandes des Metallbandes mittels eines Sensors erfaßt. Dieser Sensor steuert eine Antriebsvorrichtung bzw. Positioniervorrichtung zum Bewegen des Schweißkopfes in quer zum Schweißnahtverlauf sich erstreckender Richtung. Der Sensor erfaßt die insbesondere rechtwinklig abstehende Kante des einen Längsrandes des Metallbandes. Die Ausgangssignale des Sensors werden zeitverzögert an den Schweißkopf bzw. dessen Positioniervorrichtung gegeben, wobei die Zeitverzögerung gleich der Zeit ist, die eine gerade vom Sensor erfaßte Stelle der abgewinkelten Längsrandkante bis zum Erreichen des Schweißkopfes benötigt. Die Zeitverzögerung ist also abhängig von der Geschwindigkeit, mit der sich das Metallband bewegt, und dem Abstand zwischen Sensor und Schweißkopf.

Die Verschweißung erfolgt vorzugsweise exakt in radialer Verlängerung der abstehenden Längsrandkante, wobei diese abstehende Längsrandkante "heruntergeschweißt wird", so daß sich nach dem Verschweißen eine im wesentlichen glatte Außenfläche im Schweißnahtbereich des Metallbandes ergibt.

Das erfindungsgemäße Verfahren läßt sich gleichermaßen bei längsnahtverschweißten Metallbandeinlagen als Ummantelung für Kunststoffrohre als auch bei um ein Kunststoffrohr herum gewickelten Metallbändern einsetzen. Im letztgenannten Fall wird das zu umwickelnde Rohr von einer Vorratsspule abgenommen, durchläuft eine Umwickelstation und wird danach auf eine Aufnahmespule aufgewickelt. Die Vorratsund Aufnahmespulen drehen sich dabei dergestalt, daß sich das Rohr im Bereich zwischen den Spulen um seine Achse dreht. Diese Technik läßt sich insbesondere bei Rohren mit kleineren Durchmessern einsetzen. Bei größer dimensionierten Rohren werden diese als "Stangenware" unter Rotation um ihre Längsachse durch eine Wickelstation bewegt.

Nachfolgend wird anhand der Figuren ein Ausführungsbeispiel der Erfindung näher erläutert. Im einzelnen zeigen:
- Fig. 1: eine schematische Seitenansicht einer Anlage zum Herstellen eines Kunststoff/Metall/Kunststoff-Verbundrohres mit einer längsnahtverschweißten Metalleinlage, die durch Formen eines Metallbandes und Verschweißen seiner einander überlappenden Längsränder hergestellt wird,
- Fign. 2 bis 5: Querschnittsansichten durch die Ebene II-II bis V-V an den in Fig. 1 gezeigten Stellen,
- Fig. 6: eine Draufsicht auf die Schweißstation mit schematisch dargestellter Ansteuerung für den Schweißkopf in Abhängigkeit der Ausgangssignale eines den Längsrandverlauf des Metallbandes erfassenden Sensors,
- Fig. 7: schematisch eine Seitenansicht einer zweiten Anlage zum Herstellen eines metallummantelten Kunststoffrohres, wobei die Metallummantelung durch Umwickeln des Kunststoffrohres mit einem Metallband erzeugt wird, und
- Fig. 8: eine Draufsicht entsprechend VIII der Fig. 7 auf die Wickel- und Schweißstation.

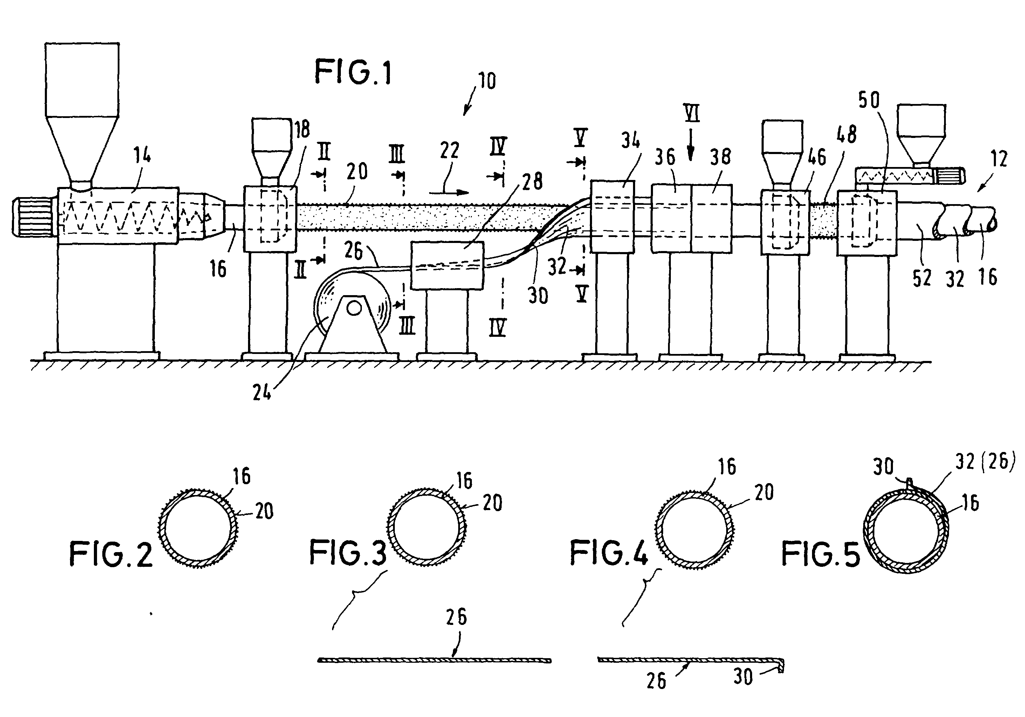

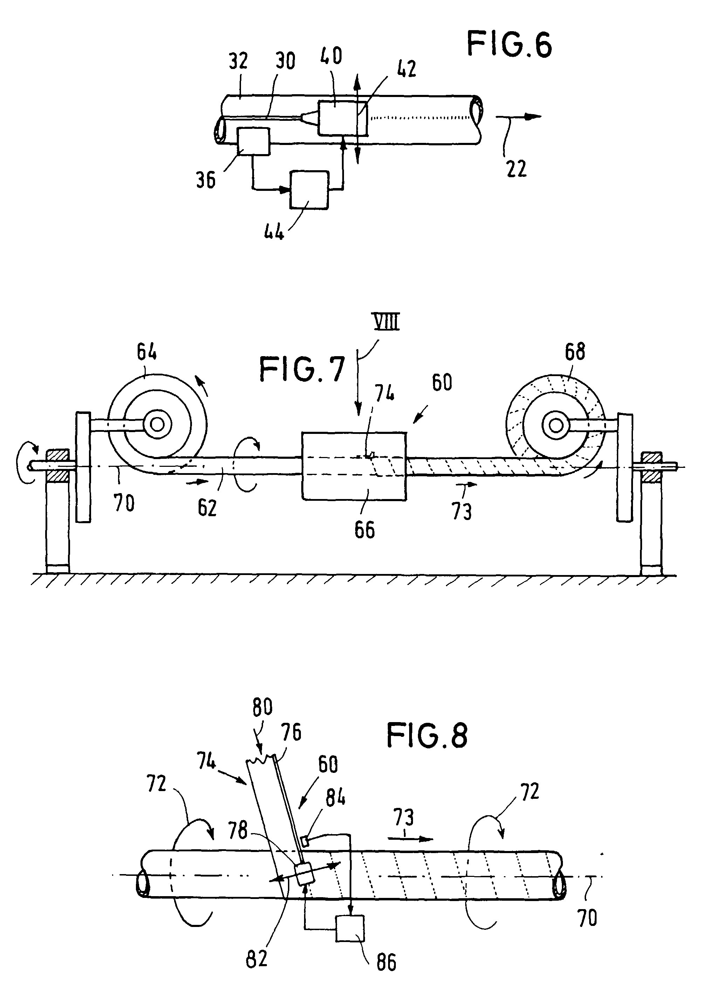

In Fig. 1 ist in Seitenansicht stark schematisiert eine Anlage 10 zur Herstellung eines Verbundrohres 12 gezeigt. Im linken Teil der Fig. 1 ist bei 14 ein Extruder gezeigt, mittels dessen das Kunststoff-Innenrohr 16 extrudiert wird. Nach einer (nicht dargestellten) Abkühlphase gelangt das extrudierte Kunststoff-Innenrohr 16 in einen Extruder 18, in dem das Kunststoff-Innenrohr 16 an seiner Außenfläche mit einem Haftvermittlermaterial 20 versehen wird. Parallel zum Vortransport des extrudierten Kunststoff-Innenrohres 16 in Richtung des Pfeils 22 wird von einem Metallbandwickel 24 Metallband 26 abgewickelt, dessen Breite größer ist als der Umfang des mit Haftvermittler 20 versehenen Kunststoff-Innenrohres 16. Das abgewickelte Metallband 26 durchläuft eine Abkantvorrichtung 28, in der der eine der beiden Längsränder 30 um 90° abgekantet wird. Anschließend wird das so abgekantete Metallband mittels (nicht dargestellter) Rollenformstationen zu einem Rohr geformt und von unten dem Kunststoff-Innenrohr 16 zugeführt, das sozusagen in das noch offene aus dem Metallband 26 geformte Metallrohr 32 eingebracht wird. Sobald das Metallband 26 das mit Haftvermittler 20 versehene Kunststoff-Innenrohr 16 umgibt, wird es durch weitere Formrollen (bei 34 angedeutet) in dichte Anlage mit der Außenfläche des Kunststoff-Innenrohres 16 gebracht, wobei die beiden Längsränder einander überlappen und der abstehende Längsrand 30 radial nach außen weist. Diese Situation ist in Fig. 5 gezeigt.

Unmittelbar nach dem Verlassen der Rollenformstation 34 wird der Verlauf des abstehenden Längsrandes 30 des Metallbandes 26 von einer Sensoreinheit 36 erfaßt. Diese Sensoreinheit 36 ist in Bewegungsrichtung 22 von Kunststoff-Innenrohr 16 und dieses umgebendem Metallrohr 32 unmittelbar vor einer Schweißstation 38 angeordnet, die einen in Fig. 6 bei 40 angedeuteten Schweißkopf, beispielsweise einen Laser-Schweißkopf, aufweist. Der Schweißkopf 40 ist, wie in Fig. 6 durch den Doppelpfeil 42 angedeutet, quer zur Bewegungsrichtung 22 linear bewegbar gelagert. Die Bewegung des Schweißkopfes 40 erfolgt mittels einer in Fig. 6 bei 44 angedeuteten Antriebs- und Positioniervorrichtung, die Ausgangssignale der Sensoreinheit 36 empfängt und diese (zeitverzögert) in Ansteuersignale zum Bewegen des Schweißkopfes 40 umsetzt bzw. umrechnet.

Bei der Sensoreinheit 36 handelt es sich insbesondere um einen hochpräzisen Näherungssensor, der berührungslos den (wellenförmigen) Verlauf des hochstehenden Längsrandes 30 des Metallbandes 26 des Metallrohres 32 erfaßt. Andere hochpräzise Sensoreinheiten sind ebenfalls denkbar.

Wie anhand von Fig. 6 zu erkennen ist, ist der Schweißkopf 40 in radialer Verlängerung des hochstehenden Längsrandes 30 des Metallbandes 26 positionierbar, so daß das Material des Metallbandes im Bereich dieses hochstehenden Längsrandes 30 als "Schweißvolumen" zur Verfügung steht.

Nach der Längsnahtverschweißung des Metallbandes 26 durchläuft das Kunststoff-Innenrohr mit dem umgebenden Metallrohr 32 (nicht dargestellte) Kalibrierrollen, die dem Metallrohr eine möglichst runde Form verleihen. Während der Erfassung des Verlaufs des abstehenden Längsrandes 30 des Metallbandes 26 und der Verschweißung ist das Metallband bzw. das Metallrohr ebenfalls zwischen Rollen geführt, die aus Vereinfachungsgründen in der Zeichnung nicht dargestellt sind.

Nachdem das Metallrohr 32 geformt ist, durchläuft das Verbundrohr aus Kunststoff-Innenrohr und Metall-Außenrohr einen Extruder 46, durch den Haftvermittler 48 aufgebracht wird. Anschließend wird in einem weiteren Extruder 50 das Kunststoffmaterial für das Kunststoff-Außenrohr 52 aufextrudiert.

Durch die Nachführung des Schweißkopfes 40 in zur Bewegungsrichtung 22 des Metallbandes 26 querverlaufender Richtung 42 läßt sich der Schweißkopf 40 dem Verlauf der einander überlappenden Längsränder 30 des Metallbandes 26 entsprechend nachführen, so daß eine hochpräzise Längsschweißnaht erzielt werden kann.

Anhand der Fign. 7 und 8 soll nachfolgend noch kurz auf ein zweites (Wickel-)Verfahren zur Herstellung eines metallummantelten Kunststoffrohres eingegangen werden. Bei dieser Anlage 60 wird das zu ummantelnde Kunststoffrohr 62 von einem Vorratswickel 64 abgewickelt, durchläuft eine Wickel- und Schweißstation 66, um danach auf einen Aufnahmewickel 68 aufgewickelt zu werden. Das Kunststoffrohr 62 erstreckt sich im Bereich zwischen den beiden Wickeln 64 und 68 geradlinig, wobei es um seine Achse 70 samt der Wickel 64 und 68 gedreht wird, was in Fig. 7 durch die Rotationspfeile 72 angedeutet ist.

Eine schematische Darstellung der Wickel-/Schweißstation 66 zeigt Fig. 8. Um das sich in Richtung des Pfeils 73 bewegende und sich dabei in Richtung der Pfeile 72 drehende Kunststoffrohr 62 wird ein seitlich zugeführtes Metallband 74 gelegt, das einen bei 76 gezeigten abstehenden Längsrand aufweist. In demjenigen Bereich, in dem das tangential zugeführte Metallband 74 in die durch das Kunst62 vorgegebene Krümmung übergeht, befindet sich in Verlängerung des abstehenden Längsrandes 76 ein Schweißkopf 78, der quer zur Bewegungsrichtung 80 des Metallbandes 74 verschiebbar ist, was in Fig. 8 durch den Doppelpfeil 82 kenntlich gemacht ist. In Bewegungsrichtung 80 unmittelbar vor dem Schweißkopf 78 befindet sich ein Sensor 84, der den Verlauf des abstehenden Längsrandes 76 erfaßt und eine Antriebsvorrichtung 86 für den Schweißkopf 78 ansteuert, die die empfangenen Sensorsignale (zeitverzögert) in Ansteuersignale für den Schweißkopf 78 umsetzt. Auf diese Weise wird auch bei einer durch Wickeltechnik erzeugte Metallummantelung eines Kunststoffrohres eine exakte Schweißnaht erzeugt, die dem Verlauf der einander überlappenden Ränder des umwickelten Metallbandes 74 folgend verläuft.

## Patentansprüche

1. Verfahren zum Ummanteln eines Kunststoffrohres mit einem Metallband, bei dem
- ein Metallband (26;74) mit seinen Längsrändern überlappend um ein Kunststoffrohr (16;62) in einem Überlappungsbereich mittels eines Schweißkopfes (40;78) verschweißt wird,
**dadurch gekennzeichnet,**
- daß einer der beiden Längsränder (30;76) des Metallbandes (26;74) abgewinkelt wird und das Metallband (26;74) derart um das Kunststoffrohr (16;62) gelegt wird, daß der abgewinkelte Längsrand (30;76) vom Kunststoffrohr (16;62) weg gerichtet ist,
- daß der Verlauf des abgewinkelten Längsrandes (30; 76) von einem Sensor (36;84) erfaßt wird und
- daß der Schweißkopf (40;78) entsprechend der Erfassung des Verlaufs des abgewinkelten Längsrandes (30;76) durch den Sensor (36;84) nachgeführt wird.

2. Verfahren nach Anspruch 1, dadurch gekennzeichnet, daß das Metallband (26) durch Formen zu einem Rohr (32) mit Längsnaht um das Kunststoffrohr (16) gelegt wird, wobei der abgewinkelte Längsrand (30) den anderen Längsrand des Metallbandes (26) überlappt.

3. Verfahren nach Anspruch 1, dadurch gekennzeichnet, daß das Metallband (74) schraubenlinienförmig um das Kunststoffrohr (62) gewickelt wird.

4. Verfahren nach einem der Ansprüche 1 bis 3, dadurch gekennzeichnet, daß die Verschweißung auf dem abgewinkelten Längsrand (30;76) des Metallbandes (26;74) erfolgt.

5. Schweißstation zur Durchführung des Verfahrens gemäß Anspruch 1, mit
- einer Abhantvorrichtung (28) zur Abhantung eines der beiden Längsränder des Metallbandes (26;74)
- einem Schweißkopf (40;78), relativ zu dem sich das zu verschweißende Metallband (26;74) bewegt,
- einem Sensor (36;84) zum Erfassen des Verlaufs eines abgewinkelten Längsrandes (30;76) des Metallbandes (26;74), wobei der Sensor (36;84) in Richtung der Relativbewegung (22;80) von Metallband (26;74) und Schweißkopf (40;78) vor diesem angeordnet ist, und
- einerAntriebs-/Positioniervorrichtung (44;86) zum Positionieren des Schweißkopfes (40;78) quer zur Relativbewegungsrichtung (22;80) von Metallband (26;74) und Schweißkopf (40;78), wobei die Antriebs-/Positioniervorrichtung (44;86) Ausgangssignale vom Sensor (36;84) empfängt und den Schweißkopf (40;78) entsprechend dem Verlauf des abgewinkelten Längsrandes (30;76) des Metallbandes (26;74) nachführt.

## Claims

1. Method for sheathing a plastic pipe with a metal strip, the method comprising the following steps:
- welding in an overlapping manner, by means of a welding head (40;78), the longitudinal edges of a metal strip (26;74) in an overlapping portion of a plastic pipe (16;62),
**characterized in that**
- one of the two longitudinal edges (30;76) of the metal strip (26;74) is bent and the metal strip (26;74) is placed around the plastic pipe (16;62) such that the bent longitudinal edge (30;76) is averted from the plastic pipe (16;62),
- the course of the bent longitudinal edge (30;76) is detected by a sensor (36;84), and
- the welding head (40;78) is guided by the sensor (36;84) in conformity with the detected course of the bent longitudinal edge (30;76).

2. Method according to claim 1, characterized in that the metal strip (26) is placed around the plastic pipe (16) by forming a pipe (32) with longitudinal seam with the bent longitudinal edge (30) overlapping the other longitudinal edge of the metal strip (26).

3. Method according to claim 1, characterized in that the metal strip (74) is helically wound around the plastic pipe (62).

4. Method according to one of claims 1 to 3, characterized in that the weld is executed on the bent longitudinal edge (30;76) of the metal strip (26;74).

5. Welding station for applying the method according to claim 1, comprising:
- a bending device (28) for bending one of the two longitudinal edges of the metal strip (26;74),
- a welding head (40;78) relatively to which the metal strip (26;74) to be welded is moved,
- a sensor (36;84) for detecting the course of a bent longitudinal edge (30;76) of the metal strip (26;74) with the sensor (36;84) being arranged upstream of the welding head (40;78) in the direction of the relative movement (22;80) of metal strip (26;74) and welding head (40;78), and
- a driving/positioning device (44;86) for positioning the welding head (40;78) at right angles to the direction of relative movement (22;80) of metal strip (26;74) and welding head (40;78) with the driving/positioning device (44; 86) receiving output signals from the sensor (36;84) and guiding the welding head (40;78) in conformity with the course of the bent longitudinal edge (30;76) of the metal strip (26;74).

## Revendications

1. Procédé destiné à gainer un tube en matière plastique avec une bande métallique, dans lequel
- une bande métallique (26 ; 74) est soudée par ses bords longitudinaux se chevauchant autour d'un tube en matière plastique (16 ; 62) dans une zone de chevauchement au moyen d'une tête de soudage (40 ; 78),
caractérisé
- en ce que l'un des deux bords longitudinaux (30 ; 76) de la bande métallique (26, 74) est replié et la bande métallique (26 ; 74) est posée autour du tube en matière plastique (16 ; 62) de telle sorte que le bord longitudinal replié (30 ; 76) est orienté en s'écartant du tube en matière plastique (16 ; 62),
- en ce que le tracé du bord longitudinal replié (30 ; 76) est enregistré par un capteur (36 ; 84) et
- en ce que la tête de soudage (40 ; 78) est guidée conformément au tracé du bord longitudinal replié (30 ; 76), enregistré par le capteur (30 ; 84).

2. Procédé selon la revendication 1, caractérisé en ce que la bande métallique (26) est posée autour du tube en matière plastique (16) par formage en un tube (32) avec une jointure longitudinale, le bord longitudinal replié (30) chevauchant l'autre bord longitudinal de la bande métallique (26).

3. Procédé selon la revendication 1, caractérisé en ce que la bande métallique (74) est enroulée de manière hélicoïdale autour du tube en matière plastique (62).

4. Procédé selon l'une quelconque des revendications 1 à 3, caractérisé en ce que le soudage est effectué sur le bord longitudinal replié (30 ; 76) de la bande métallique (26 ; 74).

5. Poste de soudage destiné à la mise en oeuvre du procédé selon la revendication 1, comprenant
- un dispositif de pliage (28) destiné à replier l'un des deux bords longitudinaux de la bande métallique (26 ; 74),
- une tête de soudage (40 ; 78) par rapport à laquelle la bande métallique (26; 74) à souder se déplace,
- un capteur (36 ; 84) destiné à enregistrer le tracé d'un bord longitudinal replié (30 ; 76) de la bande métallique (26 ; 74), le capteur (36 ; 84) étant monté en amont de la tête de soudage (40 ; 78), par référence au sens de déplacement (22 ; 80) de la bande métallique (26 ; 74) et de la tête de soudage (40 ; 78), et
- un dispositif d'entraînement et de positionnement (44 ; 86) destiné à positionner la tête de soudage (40 ; 78) transversalement par rapport au sens de déplacement (22 ; 80) de la bande métallique (26 ; 74) et de la tête de soudage (40 ; 78), le dispositif de traînement et de positionnement (44 ; 86) captant des signaux de sortie émis par le capteur (36 ; 84) et guidant la tête de soudage (40 ; 78) conformément au tracé du bord longitudinal replié (30 ; 76) de la bande métallique (26 ; 74).
